# EUROPEAN PATENT APPLICATION

(11) **EP 4 439 826 A2**
(43) Date of publication of application: **02.10.2024**
(21) Application number: 24151388.6
(22) Date of filing: 11.01.2024
(51) Int. Cl.: H01M 50/213, H01M 50/271, H01M 50/503, H01M 50/507

(54) **BATTERY PACK**

(30) Priority: 26.03.2023 KR 20230039357; 14.04.2023 KR 20230049400
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery pack includes: a case having a plurality of engaging grooves formed in a surface thereof; a plurality of battery cells in the case; a plurality of cell bus bars electrically connecting the battery cells to each other; and a battery pack bus bar including: a base portion at a side of the case and contacting at least one of the cell bus bars; and a plurality of engaging projections respectively inserted into the engaging grooves. The engaging projections extend from the base portion, are inclined toward the case, and are configured to be releasably coupled to the case by insertion into or withdrawal from the corresponding engaging groove.

## Description

### BACKGROUND

### 1. Field

Aspects of embodiments of the present disclosure relate to a battery pack.

### 2. Description of the Related Art

A secondary battery refers to a battery that is designed to be chargeable and dischargeable, different from a primary battery that is not designed to be chargeable. Secondary batteries are used as energy sources for mobile devices, electric vehicles, hybrid vehicles, electric bicycles, uninterruptible power supplies, etc., and may be used in the form of a single battery or in the form of a pack in which multiple battery cells are connected and grouped together into one unit according to a type of an external device they are applied to.

Small mobile devices, such as mobile phones, may operate for a suitable amount of time based on the output and capacity of a single battery. However, a pack-type secondary battery including a plurality of batteries is often used to power large-size mobile devices, such as laptop computers, or devices requiring long-term driving and high-power operations, such as electric vehicles, hybrid vehicles, etc., that consumer a lot of power, due to their greater output and capacity. The output voltage or output current may be increased by increasing the number of batteries in the pack.

In addition, battery packs including a plurality of batteries may be modularized by connecting a plurality of battery packs together in series and/or parallel, and in this case, the battery pack may be protected by a case. As such, the plurality of battery packs connected in series and/or parallel are used for high-voltage and high-current applications and should have high durability against an external impact. In particular, a bus bar electrically connects a plurality of batteries to each other, and the bus bar should not move in the battery pack in the event of an external impact.

Conventionally, to prevent the bus bar from changing its position, a rib corresponding to (e.g., having a complimentary shape to) the shape of the bus bar is formed in the case to avoid direct application of an external impact to the bus bar and the bus bar is fixed to the case with a bolt, a screw, etc.

However, when a plurality of battery packs are connected together to form a higher-capacity battery module, a space between the battery packs may be reduced, thereby making it difficult to use a rib, a bolt, and a screw engagement structure to fix the bus bar.

### SUMMARY

Embodiments of the present disclosure provide a battery pack including a bus bar that is easily engageable with a case even when a plurality of battery packs are densely packed in a case.

Additional aspects and features of the present disclosure will be set forth, in part, in the description which follows and, in part, will be apparent from the description or may be learned by practice of the embodiments described herein.

According to an embodiment of the present disclosure, a battery pack includes: a case having a plurality of engaging grooves formed in a surface thereof; a plurality of battery cells in the case; a plurality of cell bus bars electrically connecting the battery cells to each other; and a battery pack bus bar including: a base portion at a side of the case and contacting at least one of the cell bus bars; and a plurality of engaging projections respectively inserted into the engaging grooves. The engaging projections extend from the base portion, are inclined toward the case, and are configured to be releasably coupled to the case by insertion into or withdrawal from the corresponding engaging groove.

The engaging projections may each be inserted between two of the battery cells that are adjacent to each other in a length direction of the case.

The engaging projections may be at a lower end of the base portion.

The engaging projections may each contact an edge of a lower end of the corresponding engaging groove when inserted into the corresponding engaging groove.

A width of each of the engaging projections may be less than a width of the corresponding engaging groove.

The engaging projections may each include: an extending portion extending inclinedly at an angle from the base portion toward the case; and a projecting portion extending downwardly from an end of the extending portion.

At least a part of the extending portion may be inside the corresponding engaging groove.

The projecting portion may extend parallel to the base portion, and an outer surface of the projecting portion may contact an inner surface of the case when the projecting portion is inserted into the corresponding engaging groove.

A length by which the projecting portion and the case overlap each other may be greater than or equal to a thickness of the projecting portion.

When the battery pack bus bar is engaged with the case, the projecting portion of each of the engaging projections may contact the inner surface of the case adjacent to an edge of a lower end of the corresponding engaging grooves and the base portion may contact one of the cell bus bars.

The base portion may include a bending slit at a part of an extending portion of each of the engaging projections.

The bending slit may be at opposite sides of each of the engaging projections, and the bending slit may have a depth in a height direction of the base portion.

The battery pack bus bar may further include a fixing portion extending from an upper end of the base portion, and the fixing portion may be on a top surface of the case.

The fixing portion may include a plurality of fixing projections spaced apart from each other in a length direction of the fixing portion, and the fixing projections may be fixed on the case via a fixing hole therein.

The battery pack bus bar may further include a connecting portion extending from an upper end of the base portion, spaced apart from a top surface of the case, and connected to a control module.

The case may include: a first case; and a second case releasably coupled to the first case and on the first case. The battery pack bus bar may be at a side of the second case and may not contact the first case.

The base portion may contact one of the cell bus bars at an edge of the case from among the cell bus bars.

After the engaging projections are inserted into the corresponding engaging grooves and the battery pack bus bar is at a side of the case, the engaging projections may rotate toward the case to closely contact a side surface of the case.

The battery pack bus bar may be at a side surface corresponding to a long side of the case.

The battery pack bus bar may be provided in a pair. One of the pair of battery pack bus bars may interconnect negative tabs of the battery cells to each other, and the other one of the pair of battery pack bus bars may interconnect positive tabs of the battery cells to each other.

At least some of the above and other features of the invention are set out in the claims.

### BRIEF DESCRIPTION OF THE DRAWINGS

The above and other aspects and features of embodiments of the present disclosure will be more apparent from the following description, taken in conjunction with the accompanying drawings, in which:
FIG. 1 shows a battery pack assembly according to an embodiment;
FIG. 2 shows a battery pack according to an embodiment;
FIG. 3 shows a case according to an embodiment;
FIGS. 4 and 5 show a battery pack bus bar according to an embodiment;
FIGS. 6 to 9 show a state of a battery pack bus bar inserted into a case according to an embodiment; and
FIGS. 10 to 12 show a state of a battery pack bus bar mounted on a case according to an embodiment.

### DETAILED DESCRIPTION

Reference will now be made, in detail, to embodiments, examples of which are illustrated in the accompanying drawings. In this regard, the described embodiments may have different forms and should not be construed as being limited to the descriptions set forth herein. Accordingly, embodiments are merely described below, by referring to the figures, to explain aspects and features of the present disclosure.

The present disclosure includes various embodiments and variations, and specific embodiments will be shown in the drawings and described in the description below. The present disclosure, however, is not limited to these described embodiments and includes all modifications, equivalents, and substitutes included in the scope of the present disclosure.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

When an embodiment may be implemented in a process, a particular process order may be performed differently from the order described. For example, two processes described in succession may be performed concurrently or substantially simultaneously or may be performed in an order reverse to the order described.

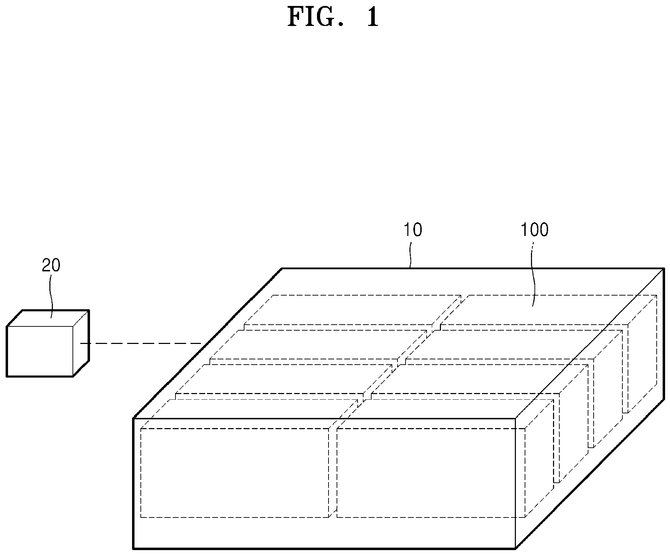

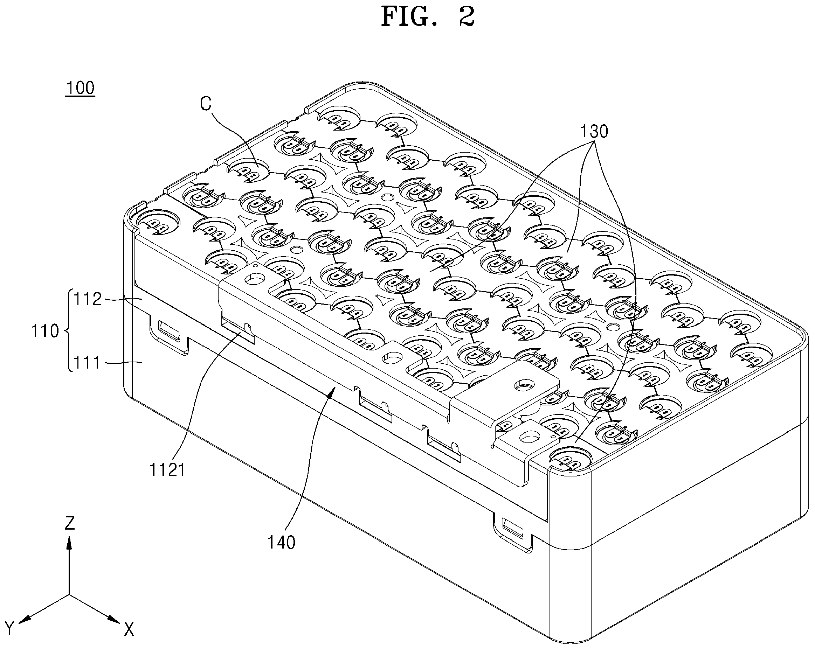

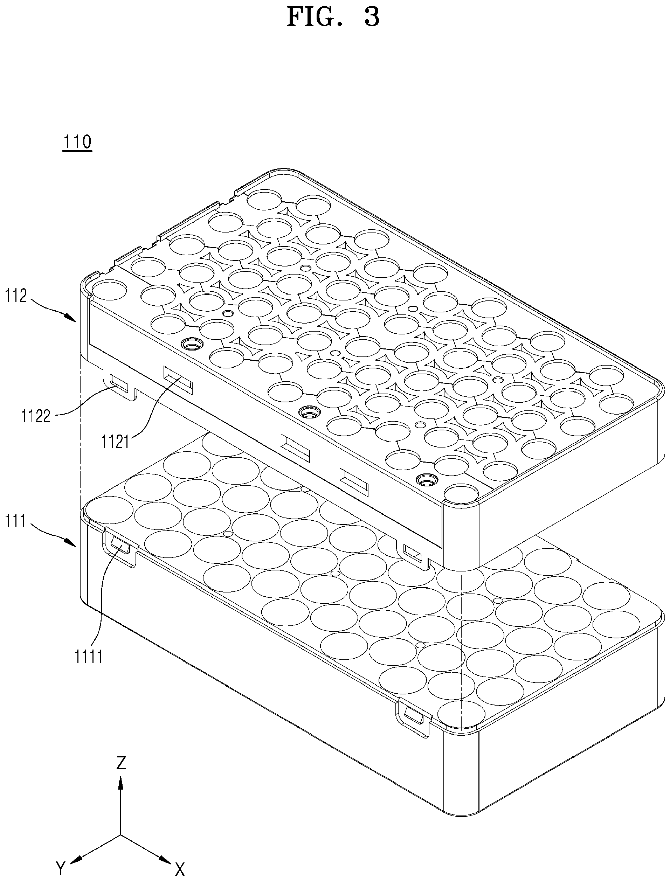

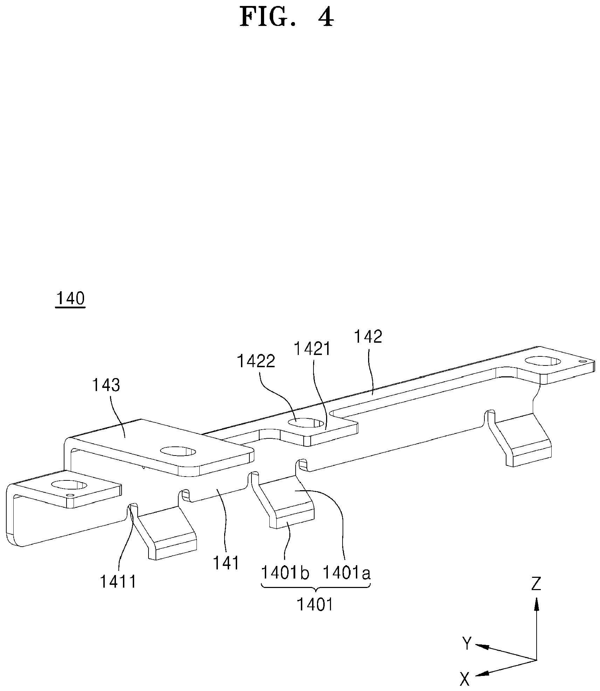

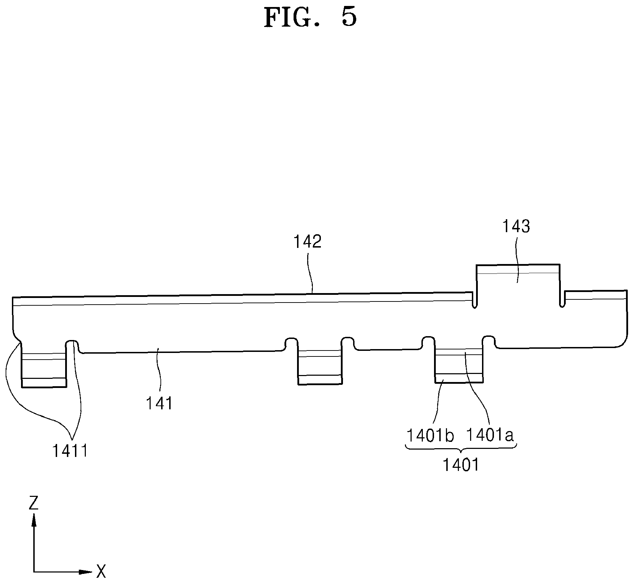

FIG. 1 shows a battery pack assembly 10 according to an embodiment, FIG. 2 shows a battery pack 100 according to an embodiment, FIG. 3 shows a case 110 according to an embodiment, and FIGS. 4 and 5 show a battery pack bus bar 140 according to an embodiment. In particular, FIG. 5 shows the battery pack bus bar 140 when viewed from an outside.

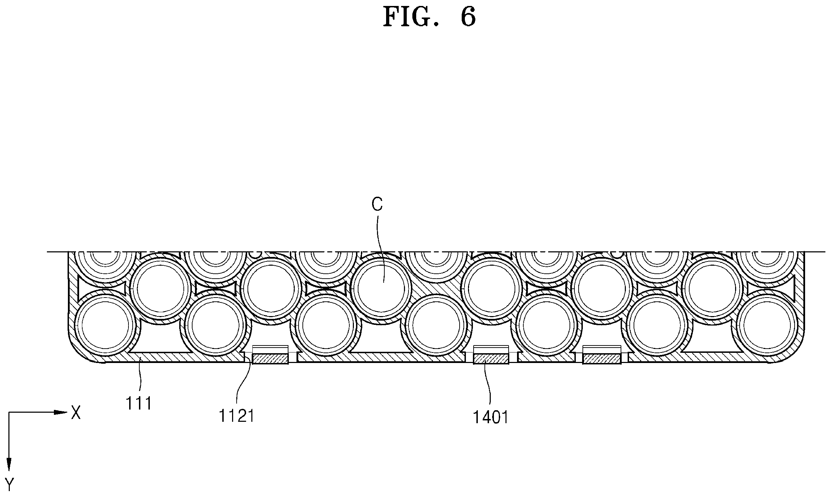

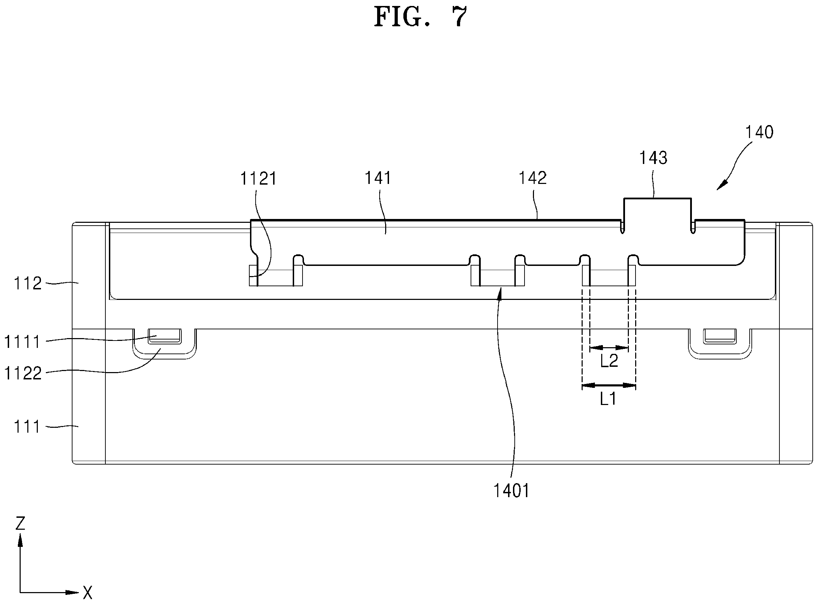

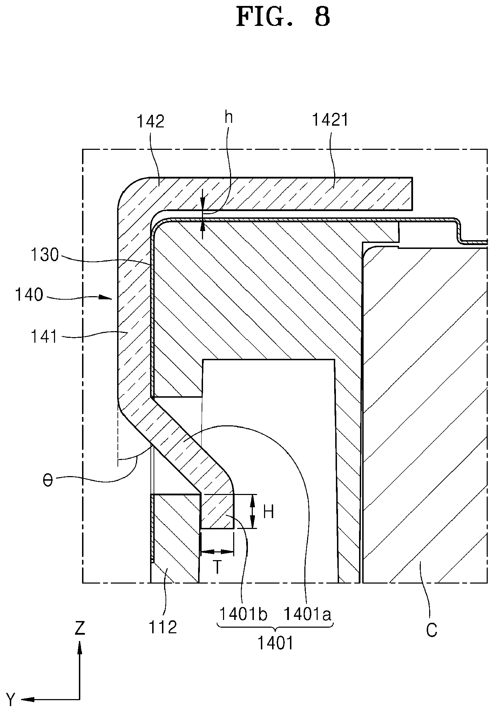

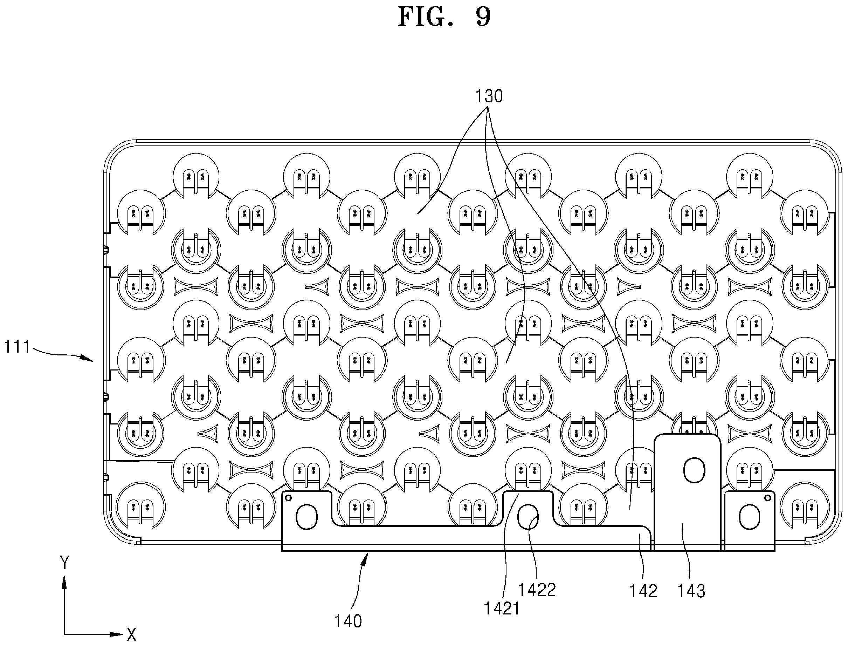

FIGS. 6 to 9 show the battery pack bus bar 140, according to an embodiment, inserted into the case 110. FIG. 6 shows a cross-section showing a state of the battery pack bus bar 140 inserted into the case 110, FIG. 7 shows a side surface showing a state of the battery pack bus bar 140 inserted into the case 110, FIG. 8 shows a longitudinal section of a part of the battery pack bus bar 140 inserted into the case 110, and FIG. 9 shows a state of the battery pack bus bar 140 inserted into the case 110, viewed from the top.

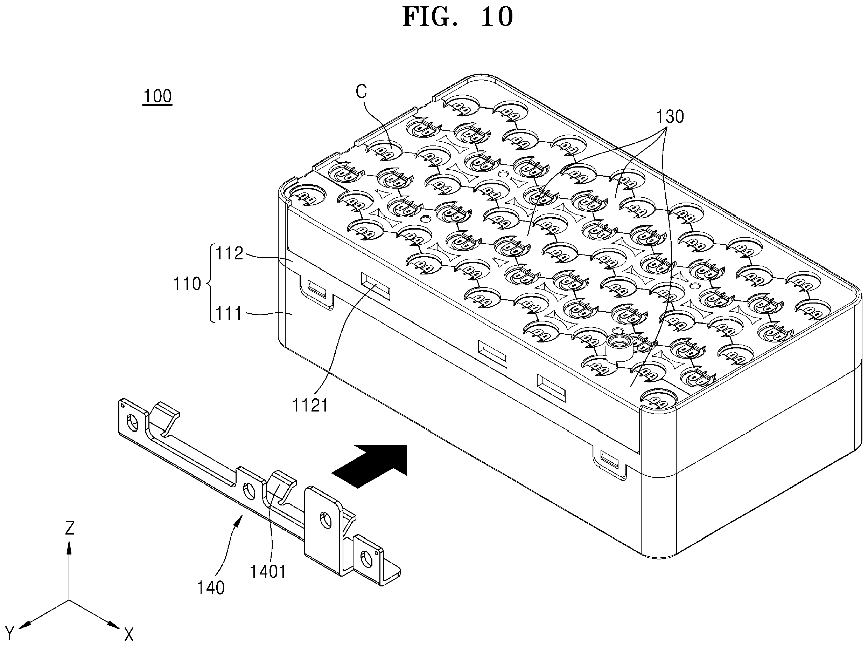

FIGS. 10 to 12 show the battery pack bus bar 140, according to an embodiment, being mounted on the case 110.

Referring to FIG. 1, a battery pack assembly 10 may include a battery pack 100. A plurality of battery packs 100 may be connected together in series and/or parallel to form the battery pack assembly 10, thereby being capable of generating high output. As will be described later, each of the plurality of battery packs 100 may be covered by a case 110, and the plurality of battery packs 100 may be electrically connected to each other through the battery pack bus bar 140. The plurality of battery packs 100 may be spaced apart from each other by a space (e.g., a predetermined space) and disposed inside a housing of the battery pack assembly 10.

The plurality of battery packs 100 and the battery pack assembly 10 including the same may be controlled by a controller 20. The controller 20 may be connected to a protection circuit module provided in each battery pack 100 and may control current and voltage states of the battery pack 100 to prevent overcharge, overdischarge, overcurrent, and short circuit of the battery pack 100 and the battery pack assembly 10.

While eight battery packs 100 are shown in FIG. 1, the number of battery packs 100 included in the battery pack assembly 10 is not limited. A suitable (or appropriate) number of battery packs 100 may be provided based on an output and voltage and current states of the battery pack assembly 10. In an embodiment, the battery pack assembly 10 may include two or more battery packs 100.

Referring to FIG. 2, the battery pack 100, according to an embodiment, may include a plurality of battery cells C. Each battery cell C may be a cylindrical secondary battery in which a separator is disposed between a pair of pole (or electrode) plates and rolled together. In an embodiment, the pair of pole plates may include a positive plate and a negative plate, and each of the positive plate and the negative plate has a coated portion coated with an active material on a base and an uncoated portion not coated with the active material. The negative plate may include, as an active material, a negative active material including a carbon material, such as crystalline carbon, amorphous carbon, a carbon composite, carbon fiber, etc., and a lithium metal or a lithium alloy. The positive plate may include, as an active material, a positive active material including lithium, such as LiCoO₂, LiNiO₂, LiMnO₂, LiMn_{2O4}, LiNi_{1-x-yC}oₓM_{y}O₂, etc. The separator may be disposed between the pair of pole plates to insulate them while allowing the exchange of lithium ions between the pair of pole plates.

Each battery cell C may include a housing surrounding (or accommodating) the pair of pole plates and the separator, and the housing may include a positive tab and a negative tab disposed at opposite ends in a longitudinal direction of the housing.

The number of battery cells C is not limited, and a plurality of battery cells C may be provided according to specifications of the battery pack 100 and the battery pack assembly 10. Some of the plurality of battery cells C may be disposed with positive tabs oriented upwardly, and some others thereof may be disposed with negative tabs oriented upwardly. In other embodiments, all of the plurality of battery cells C may be disposed with positive tabs oriented upwardly or negative tabs oriented upwardly.

The battery pack 100 includes the case 110, a cell bus bar 130, and the battery pack bus bar 140.

The battery pack 100 includes the case 110, the plurality of battery cells C received in (e.g., accommodated in) the case 110, the plurality of cell bus bars 130 electrically connecting the plurality of battery cells C to each other, and the one or more battery pack bus bars 140. The battery pack bus bars 140 include a plurality of engaging projections 1401 to be inserted into a plurality of engaging grooves 1121 formed in a surface of the case 110 such that the plurality of engaging projections 1401 are attachable to or detachable from (e.g., are releasably coupled to) the case 110 by insertion into or withdrawal from the engaging groove 1121. The battery pack bus bars 140 also include a base portion 141 disposed at a side of the case 110 and contacting at least one of the plurality of cell bus bars 130, and the plurality of engaging projections 1401 extend from the base portion 141 and are inclined toward the case 110.

As shown in FIGS. 2 and 3, the case 110 may hold and/or support other components of the battery pack 100 and may have an inner space in which the plurality of battery cells C are disposed. In an embodiment, the case 110 may have a rectangular parallelepiped shape with a long side in a direction (e.g., an X-direction in FIG. 2) and having rounded, externally convex corners.

In an embodiment, the case 110 may include a first case (e.g., a lower case) 111 and a second case (e.g., an upper case) 112.

The first case 111 may be disposed under the case 110 (e.g., under the second case 112; e.g. the second case 112 may be on the first case 111) and may support the plurality of battery cells C therein together with the second case 112. As shown in FIG. 3, the first case 111 may include a plurality of cylindrical seating holes (or openings) corresponding to the plurality of battery cells C. In a state in which the battery cell C is inserted into the seating hole of the first case 111, an electrode tab disposed on a bottom surface may be exposed to an outside of the first case 111, and the cell bus bar 130, described in more detail below, may contact the electrode tab of the battery cell C. Thus, the plurality of battery cells C may be electrically connected to each other.

In an embodiment, the first case 111 may include a locking projection 1111. As shown in FIG. 3, a plurality of locking projections 1111 may be disposed on a side surface of the first case 111. The locking projections 1111 may protrude outwardly from the side surface of the first case 111 and may be inserted into corresponding locking grooves 1122 in the second case 112. Thus, the second case 112 may be attachably/detachably coupled to (e.g., releasably coupled to) the first case 111.

In an embodiment, a peripheral portion of the locking projection 1111 may be recessed inwardly to form a step with the side surface of the first case 111. A peripheral portion of the locking groove 1122 may be seated on the peripheral portion of the locking projection 1111.

In an embodiment, the locking projection 1111 may have a shape inclined downwardly and outwardly. Thus, when the second case 112 is pushed down toward the first case 111, the locking groove 1122 may be inserted into the locking projection 1111 while sliding along an inclined outer surface of the locking projection 1111.

In an embodiment, two locking projections 1111 may be disposed spaced apart from each other on a side surface corresponding to a long side of the first case 111.

The second case 112 may be disposed on the case 110 and may support the plurality of battery cells C therein together with the first case 111. As shown in FIG. 3, the second case 112 may include a plurality of cylindrical seating holes (or openings) to correspond to the seating holes formed in the first case 111. In a state in which the battery cell C is inserted into the seating hole of the second case 112, an electrode tab disposed on a top surface may be exposed to an outside of the second case 112 and the cell bus bar 130, described in more detail below, may contact the electrode tab of the battery cell C. Thus, the plurality of battery cells C may be electrically connected to each other.

In an embodiment, the second case 112 may include an engaging groove 1121. As shown in FIG. 3, one or more engaging grooves 1121 may be disposed on the side surface of the second case 112. In an embodiment, a plurality of engaging grooves 1121 may be disposed spaced apart from each other on the side surface corresponding to the long side of the second case 112. The engaging projection 1401 of the battery pack bus bar 140, described in more detail below, may be inserted into and fixed in the engaging groove 1121.

In an embodiment, the engaging groove 1121 may be formed between the battery cells C. In an embodiment, as shown in FIG. 3, the engaging groove 1121 may be disposed between adjacent seating holes of the second case 112 in a direction (e.g., an X-axis direction in FIG. 3). Thus, the engaging projection 1401 of the battery pack bus bar 140 described below may also be inserted into a space between the battery cells C to prevent the battery pack bus bar 140 and the battery cell C from interfering with each other.

In an embodiment, the engaging groove 1121 may be disposed to be staggered with (e.g., may be alternatingly arranged with) the locking projection 1111 and the locking groove 1122. As shown in FIG. 3, the engaging groove 1121 may be disposed not to overlap (e.g., to be offset from) the locking projection 1111 and the locking groove 1122 in a direction (e.g., the X-axis direction in FIG. 3) so as not to interfere with the battery pack bus bar 140 when the first case 111 and the second case 112 are coupled to each other.

In an embodiment, the second case 112 may include the locking groove 1122. As shown in FIG. 3, a plurality of locking grooves 1122 may be disposed on a side surface of the second case 112. The locking groove 1122 may protrude outwardly from the side surface of the second case 112 and may be inserted into the locking projection 1111 of the first case 111. Thus, the first case 111 may be attachably/detachably (e.g., releasably) coupled to the second case 112.

In an embodiment, the locking groove 1122 may extend downwardly from a lower end of an edge of the second case 112. The locking groove 1122 may be formed at a position corresponding to the locking projection 1111 and may be provided in the same number as (e.g., may be provided in one-to-one correspondence with) the locking projection 1111. In an embodiment, two locking grooves 1122 may be disposed spaced apart from each other on a side surface corresponding to a long side of the second case 112.

The cell bus bar 130 may be disposed at a side of the case 110 to electrically connect the plurality of battery cells C to one another. In an embodiment, as shown in FIG. 2, the plurality of cell bus bars 130 may be disposed on a top surface of the second case 112 to electrically connect electrode tabs on the top surfaces of the battery cells C to each other.

In an embodiment, the plurality of battery cells C contacting one cell bus bar 130 may contact the cell bus bar 130 through the same electrode tabs (e.g., through electrode tabs having the same polarity). In an embodiment, the plurality of battery cells C contacting one cell bus bar 130 may contact the cell bus bar 130 with their negative tabs contacting the cell bus bar 130 or with their positive tabs contacting the cell bus bar 130. Thus, each cell bus bar 130 may act as a negative bus bar interconnecting the negative tabs of the plurality of battery cells C or a positive bus bar interconnecting the positive tabs of the plurality of battery cells C.

As shown in FIG. 9, the plurality of cell bus bars 130 may be disposed on the bottom surface of the first case 111 to electrically connect electrode tabs on the bottom surfaces of the battery cells C to each other.

The battery pack bus bar 140 may be a conductive member disposed at a side of the battery pack 100 and may interconnect the cell bus bars 130 respectively included in the battery packs 100. In an embodiment, the battery pack bus bar 140 may be electrically connected to at least one of the plurality of cell bus bars 130 and may contact the battery pack bus bar 140 included in the adjacent battery pack 100, thereby connecting the battery packs 100 together in series or in parallel.

In an embodiment, a plurality of battery pack bus bars 140 may be provided. Although one battery pack bus bar 140 is shown as being disposed on the side surface of the case 110 in FIG. 2, another battery pack bus bar 140 may be disposed on the opposite side surface of the case 110 such that a total of two battery pack bus bars 140 may be provided. In an embodiment, the pair of battery pack bus bars 140 may be disposed respectively on a pair of side surfaces corresponding to long sides of the case 110.

In an embodiment, the plurality of battery pack bus bars 140 may have different polarities. In an embodiment, one of the two battery pack bus bars 140 may be electrically connected to the cell bus bar 130 connecting the negative tabs of the plurality of battery cells C, and the other battery pack bus bar 140 may be electrically connected to the cell bus bar 130 connecting the positive tabs of the plurality of battery cells C.

In an embodiment, the battery pack bus bar 140 may be disposed on the second case 112 of the case 110 and may not contact the first case 111.

In an embodiment, the one or more battery pack bus bars 140 may be disposed at a side of the second case 112 to avoid contacting the first case 111.

In an embodiment, the battery pack bus bar 140 may contact the cell bus bar 130 located at an edge of the case 110 from among the plurality of cell bus bars 130. In an embodiment, as shown in FIG. 2, any one of the plurality of cell bus bars 130 may be disposed adjacent to the edge of the case 110 in a direction (e.g., the Y-axis direction). For example, at least a part of the corresponding cell bus bar 130 may be bent and disposed on the side surface of the second case 112. The battery pack bus bar 140 may be disposed to contact the cell bus bar 130 located at the edge of the case 110.

When the plurality of battery pack bus bars 140 are provided, another battery pack bus bar 140 may also contact the cell bus bar 130 located at the edge of the case 110 from among the plurality of cell bus bars 130.

In an embodiment, the battery pack bus bar 140 may include a base portion 141 and a fixing portion 142.

The base portion 141 may be disposed on a side surface of the case 110. The base portion 141 may be disposed on the side surface corresponding to the long side of the second case 112 in the length direction. In an embodiment, the base portion 141 may extend in a direction (e.g., the X-axis direction in FIG. 4) and may be disposed on the side surface of the second case 112 such that at least a part of the cell bus bar 130 is disposed between the base portion 141 and the second case 112. As shown in FIG. 2, a part of one of the plurality of cell bus bars 130 may be bent along a corner of the second case 112 so as to be disposed on the side surface of the second case 112. The base portion 141 may be electrically connected to the cell bus bar 130 and may be in contact with a bent portion of the cell bus bar 130.

In an embodiment, the base portion 141 may contact a cell bus bar 130 located at an edge of the case 110 from among the plurality of cell bus bars 130.

In an embodiment, a plurality of engaging projections 1401 may be disposed at a side of the base portion 141. As shown in FIG. 4, the plurality of engaging projections 1401 may be disposed apart from each other (e.g., may be spaced apart from each other) at a lower end of the base portion 141 and may be respectively inserted into the plurality of engaging grooves 1121 of the case 110. By inserting the engaging projection 1401 into or removing (e.g. withdrawing) it from the engaging groove 1121, the battery pack bus bar 140 may be attached to or detached from the case 110 (e.g. releasably coupled to the case).

In an embodiment, the engaging projection 1401 may be inserted between the adjacent battery cells C. In an embodiment, the plurality of engaging projections 1401 may be each inserted between two battery cells C adjacent in a length direction of the case 110. As shown in FIGS. 2 and 3, the engaging groove 1121 may be formed between the battery cells C adjacent in a direction (e.g., the X-axis direction). Thus, the engaging projection 1401 may also be inserted between the battery cells C adjacent in a direction (e.g., the X-axis direction). As shown in FIG. 6, the engaging projection 1401 is inserted into a space between the adjacent battery cells C, thereby preventing the engaging projection 1401 from interfering with the battery cells C and obviating a need for a separate additional space in the case 110 for the engaging projection 1401.

In an embodiment, the engaging projection 1401 may be inclined obliquely from the base portion 141 toward the case 110. In an embodiment, as shown in FIG. 4, the engaging projection 1401 may extend at an angle (e.g., a predetermined angle) from the lower end of the base portion 141 toward the case 110. Thus, as shown in FIG. 9, when the battery pack bus bar 140 is mounted on the case 110, the engaging projection 1401 may be inserted into an inner side of the second case 112 and supported by the second case 112.

In an embodiment, the plurality of engaging projections 1401 may each contact an edge of a lower end of the engaging groove 1121 in a state of being inserted into the engaging groove 1121.

In an embodiment, the engaging projection 1401 may have a width that is less than that of the engaging groove 1121. As shown in FIG. 7, a width L2 in a direction (e.g., the X-axis direction) of the engaging projection 1401 may be less than a width L1 of the engaging groove 1121. Thus, the engaging projection 1401 may be stably inserted into the engaging groove 1121.

In an embodiment, the engaging projection 1401 may include an extending portion 1401a and a projecting portion 1401b.

The extending portion 1401a may be connected to the base portion 141 and may extend inclinedly at an angle (e.g., a predetermined angle). In an embodiment, as shown in FIG. 8, the extending portion 1401a may extend inclinedly at an angle θ toward the case 110 on a side surface of the base portion 141. The angle θ may be in a range of about 15 degrees to about 70 degrees, and in some embodiments, in a range of about 20 degrees to about 60 degrees or in a range of about 25 degrees to about 50 degrees. In one embodiment, the angle θ may be about 45 degrees.

In an embodiment, at least a part of the extending portion 1401a may be disposed inside the engaging groove 1121. As shown in FIG. 9, when the engaging projection 1410 is inserted into the engaging groove 1121, the extending portion 1401a may be disposed such that a part thereof is disposed on an outer side of the engaging groove 1121, another part thereof overlaps the engaging groove 1121, and another part thereof is disposed on an inner side of the second case 112 (e.g., an inner side of the engaging groove 1121).

The projecting portion 1401b may extend downwardly from an end of the extending portion 1401a. As shown in FIGS. 4, 5, and 8, the projecting portion 1401b may vertically extend downwardly from a lower end of the extending portion 1401a. In an embodiment, the projecting portion 1401b may extend in parallel to the base portion 141, and an outer surface of the projecting portion 1401b may contact an inner surface of the case 110 in a state in which the projecting portion 1401b is inserted into the engaging groove 1121. An outer surface of the projecting portion 1401b may contact an inner surface of the second case 112 in a state in which the engaging projection 1401 is inserted into the engaging groove 1121. When the outer surface of the projecting portion 1401b contacts the inner surface of the second case 112 corresponding to a lower edge of the engaging groove 1121, the battery pack bus bar 140 may be fixed on the second case 112.

In an embodiment, an overlapping length between the projecting portion 1401b and the case 110 may be greater than or equal to a thickness of the projecting portion 1401b. As shown in FIG. 8, a length H at where the projecting portion 1401b contacts the second case 112 in a height direction (e.g., the Z-axis direction) may be greater than or equal to a thickness T of the projecting portion 1401b in a width direction (e.g., the Y-axis direction). Thus, in spite of application of an external impact on the battery pack bus bar 140 engaged with the case 110, the engaging projection 1401 may be stably fixed on the engaging groove 1121.

In an embodiment, in a state in which the battery pack bus bar 140 is engaged with the case 110, the projecting portion 1401b of each of the plurality of engaging projections 1401 may contact the inner surface of the case 110 adjacent to the edge of the lower end of the plurality of engaging grooves 1121 and the base portion 141 may contact one of the plurality of cell bus bars 130.

In an embodiment, the base portion 141 may include a bending slit 1411. In an embodiment, the base portion 141 may include one or more bending slits 1411 formed by cutting at least a part of an extending portion of each of the plurality of engaging projections 1401. As shown in FIGS. 4 and 5, the bending slit 1411 may be formed by cutting a part of the base portion 141 adjacent to the engaging projection 1401. The bending slit 1411 may be formed at a lower end of the base portion 141 from which the engaging projection 1401 extend, and may be formed at at least one of the opposite sides of the engaging projection 1401. The bending slit 1411 may be formed concavely to have a depth in a direction (e.g., the Z-axis direction in FIG. 4) from the lower end of the base portion 141. In an embodiment, the one or more bending slits 1411 may be formed at opposite sides of each of the plurality of engaging projections 1401, and each may have a depth (e.g., a predetermined depth) in a height direction of the base portion 141. Thus, the engaging projection 1401 may be more flexibly bent than without the bending slit 1411 and, thus, can be stably inserted and fixed into the engaging groove 1121.

The fixing portion 142 may extend from a side of the base portion 141 and may be fixed in the case 110. In an embodiment, as shown in FIG. 4, the fixing portion 142 may vertically extend from an upper end of the base portion 141 toward the case 110. The fixing portion 142 may be disposed on the second case 112 and may be fixed to the second case 112 by a bolt, welding, etc.

In an embodiment, the fixing portion 142 may include a fixing projection 1421 and a fixing hole (e.g., a fixing opening) 1422.

As shown in FIG. 4, a plurality of fixing projections 1421 may be disposed apart from each other in the length direction of the fixing portion 142. The fixing projection 1421 may extend further than (e.g., may protrude beyond) other parts of the fixing portion 142, and the fixing hole 1422 may be formed therein. The fixing hole 1422 may be disposed to correspond to an engaging hole formed on the top surface of the second case 112, and the battery pack bus bar 140 may be connected to the engaging hole via a bolt, welding, etc.

In an embodiment, when the battery pack bus bar 140 is engaged with the case 110, the fixing portion 142 may not contact the cell bus bar 130. As shown in FIG. 8, bottom surfaces of the fixing portion 142 and the fixing projection 1421 may be spaced apart from a top surface of the cell bus bar 130 by a height h. As a result, when the fixing projection 1421 is fixed to the second case 112 via a bolt, etc., the fixing portion 142 may not excessively press down the cell bus bar 130.

In an embodiment, the battery pack bus bar 140 may further include a connecting portion 143.

As shown in FIGS. 4 and 5, the connecting portion 143 may extend from a side of an upper end of the base portion 141 and may be positioned higher than the adjacent fixing portion 142 in the height direction. The connecting portion 143 may be disposed on (e.g., may extend over) the top surface of the second case 112 and may be connected to a control module. For example, the connecting portion 143 may connect the battery pack bus bar 140 to the control module through which the plurality of battery packs 100 may be connected to the controller 20.

Next, with reference to FIGS. 10 to 12, an operation of engaging the battery pack bus bar 140 to the case 110 will be described.

In an embodiment, after the plurality of engaging projections 1401 are inserted into the plurality of engaging grooves 1121 in a state in which the one or more battery pack bus bars 140 are disposed at a side of the case 110, the plurality of engaging projections 1401 are rotated toward the case 110 to closely contact a side surface of the case 110.

As shown in FIG. 10, the battery pack bus bar 140 may be positioned such that the plurality of engaging projections 1401 face the case 110. The battery pack bus bar 140 may be in a state of being rotated with respect to a state in which it is mounted on the case 110. The battery pack bus bar 140 may be in a state of being rotated at an angle outwardly with respect to the X axis.

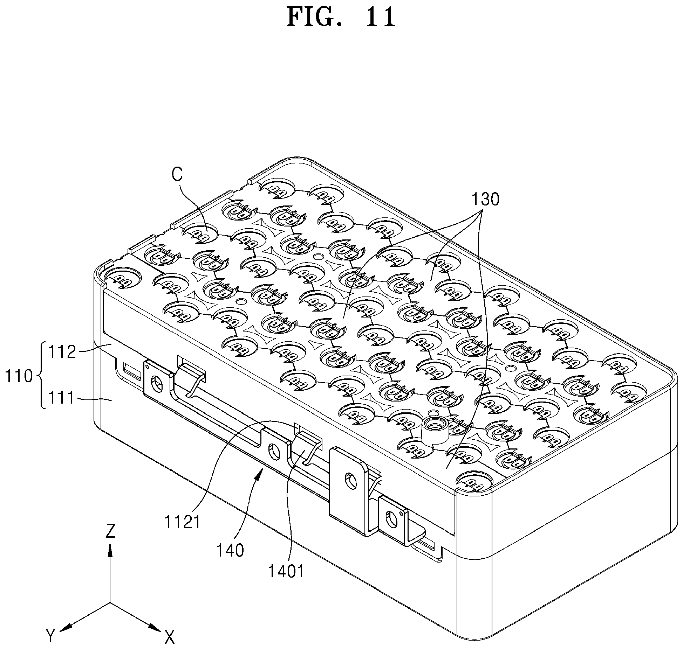

Next, as shown in FIG. 11, the plurality of engaging projections 1401 may be respectively inserted into the plurality of engaging grooves 1121. In this state, at least a part of the engaging projection 1401 (e.g., the projecting portion 1401b) may be inserted into the engaging groove 1121.

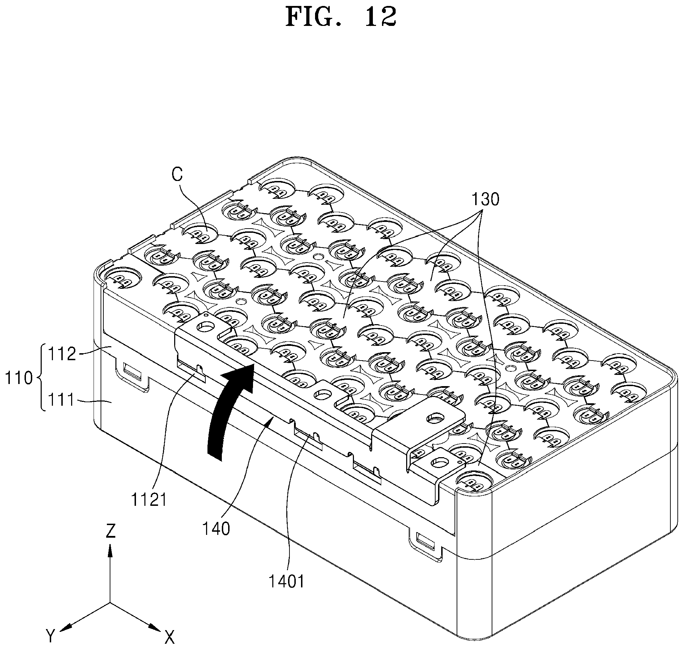

Next, as shown in FIG. 12, the battery pack bus bar 140 may be rotated such that the engaging projection 1401 is completely inserted into the engaging groove 1121. In an embodiment, the battery pack bus bar 140 may be rotated toward the case 110 in the X-axis direction while the battery pack bus bar 140 is pushed toward the case 110, causing the engaging projection 1401 to be inserted into the inner side of the second case 112. Thus, the projecting portion 1401b may be disposed in parallel to and in contact with the inner surface of the second case 112 such that the battery pack bus bar 140 may be engaged with the case 110.

With this structure, the battery pack 100, according to an embodiment, may form the battery pack assembly 10 by being densely clustered with other battery packs 100. For example, the battery pack bus bar 140 connecting the battery packs 100 to each other may closely contact the side surfaces of the case 110 and, at the same time, contact the cell bus bar 130 such that a distance between the battery packs 100 may be reduced when compared to a battery pack bus bar including an existing rib. Consequently, the density of the plurality of battery packs 100 included in the battery pack assembly 10 may be increased and the sizes of the battery pack 100 and the battery pack assembly 10 may be reduced.

It should be understood that the embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims and their equivalents.

## Claims

1. A battery pack comprising:
a case having a plurality of engaging grooves formed in a surface thereof;
a plurality of battery cells in the case;
a plurality of cell bus bars electrically connecting the battery cells to each other; and
a battery pack bus bar comprising:
a base portion at a side of the case and contacting at least one of the cell bus bars; and
a plurality of engaging projections respectively inserted into the engaging grooves, the engaging projections extending from the base portion and being inclined toward the case,
wherein the engaging projections are configured to be releasably coupled to the case by insertion into or withdrawal from the corresponding engaging groove.

2. The battery pack of claim 1, wherein
the engaging projections are each inserted between two of the battery cells that are adjacent to each other in a length direction of the case.

3. The battery pack of claim 1 or claim 2, wherein the engaging projections are at a lower end of the base portion.

4. The battery pack of any one of claims 1 to 3, wherein the engaging projections each contact an edge of a lower end of the corresponding engaging groove when inserted into the corresponding engaging groove.

5. The battery pack of any one of claims 1 to 4, wherein a width of each of the engaging projections is less than a width of the corresponding engaging groove.

6. The battery pack of any one of claims 1 to 5, wherein the engaging projections each comprise:
an extending portion extending inclinedly at an angle from the base portion toward the case; and
a projecting portion extending downwardly from an end of the extending portion.

7. The battery pack of claim 6, wherein at least a part of the extending portion is inside the corresponding engaging groove.

8. The battery pack of claim 6 or claim 7, wherein the projecting portion extends parallel to the base portion, and
wherein an outer surface of the projecting portion contacts an inner surface of the case when the projecting portion is inserted into the corresponding engaging groove.

9. The battery pack of claim 8, wherein:
(i) a length by which the projecting portion and the case overlap each other is greater than or equal to a thickness of the projecting portion; and/or
(ii) when the battery pack bus bar is engaged with the case, the projecting portion of each of the engaging projections contacts the inner surface of the case adjacent to an edge of a lower end of the corresponding engaging grooves and the base portion contacts one of the cell bus bars.

10. The battery pack of any one of claims 1 to 9, wherein the base portion comprises a bending slit at a part of an extending portion of each of the engaging projections, optionally wherein the bending slit is at opposite sides of each of the engaging projections, and
wherein the bending slit has a depth in a height direction of the base portion.

11. The battery pack of any one of claims 1 to 10, wherein the battery pack bus bar further comprises a fixing portion extending from an upper end of the base portion, and
wherein the fixing portion is on a top surface of the case, optionally wherein the fixing portion comprises a plurality of fixing projections spaced apart from each other in a length direction of the fixing portion, and wherein the fixing projections are fixed on the case via a fixing hole therein.

12. The battery pack of any one of claims 1 to 11, wherein the battery pack bus bar further comprises a connecting portion extending from an upper end of the base portion, spaced apart from a top surface of the case, and connected to a control module.

13. The battery pack of any one of claims 1 to 12, wherein the case comprises:
a first case; and
a second case releasably coupled to the first case and on the first case, and
wherein the battery pack bus bar is at a side of the second case and does not contact the first case.

14. The battery pack of any one of claims 1 to 13, wherein:
(i) the base portion contacts one of the cell bus bars at an edge of the case from among the cell bus bars, and/or
(ii) after the engaging projections are inserted into the corresponding engaging grooves and the battery pack bus bar is at a side of the case, the engaging projections rotate toward the case to closely contact a side surface of the case.

15. The battery pack of any one of claims 1 to 14, wherein:
(i) the battery pack bus bar is at a side surface corresponding to a long side of the case, and/or
(ii) the battery pack bus bar is provided in a pair, and wherein one of the pair of battery pack bus bars interconnects negative tabs of the battery cells to each other, and the other one of the pair of battery pack bus bars interconnects positive tabs of the battery cells to each other.
